# EUROPÄISCHE PATENTANMELDUNG

(11) **EP 3 098 201 A1**
(43) Veröffentlichungstag der Anmeldung: **30.11.2016**
(21) Anmeldenummer: 15169328.0
(22) Anmeldetag: 27.05.2015
(51) Int. Cl.: C01B 33/107, B01J 21/08

(54) **VERFAHREN ZUR KATALYTISCHEN DEHALOGENIERUNG VON CHLORSILANEN**

(71) Anmelder: Evonik Degussa GmbH, 45128 Essen (DE)
(72) Erfinder: LANG, Jürgen Erwin, Dr., 76229 Karlsruhe (DE); MÜH, Ekkehard, Dr., 79618 Rheinfelden (DE); RAULEDER, Hartwig, Dr., 79618 Rheinfelden (DE); OLEK, Maciej, Dr., 63796 Kahl (DE); MONKIEWICZ, Jaroslaw, Dr., 79618 Rheinfelden (DE)

(57) **Zusammenfassung**

Gegenstand der Erfindung ist ein Verfahren zur katalytischen Hydrodehalogenierung von halogenhaltigen Verbindungen in einem Wirbelschichtreaktor in Anwesenheit eines metallischen Katalysators, wobei die Wirbelschicht den Katalysator enthält.

## Beschreibung

Die Erfindung betrifft ein Verfahren zur katalytischen Hydrodehalogenierung von halogenhaltigen Verbindungen in einem Wirbelschichtreaktor in Anwesenheit eines metallischen Katalysators, wobei die Wirbelschicht den Katalysator enthält.

Im Stand der Technik ist bekannt, dass Silizium, insbesondere hochreines Silizium aus Chlorsilanen, insbesondere Trichlorsilan, unter Zugabe von Wasserstoff im sogenannten Siemens-Prozess zu gewinnen. Eine andere Variante zur Erzeugung Siliziumerzeugung besteht in der Umsetzung von Wasserstoff und Monosilan, SiH₄, welches aus Trichlorsilan gewonnen werden kann. Diesen Verfahren ist gemeinsam, dass in deren Verlauf SiCl₄ anfällt. SiCl₄ fällt ebenfalls bei der Herstellung von Trichlorsilan aus Si und HCl als Prozess-Begleitprodukt an.

SiCl₄ kann durch Umsetzung mit Wasserstoff in Trichlorsilan insbesondere in Gegenwart von Katalysatoren umgesetzt werden. WO 2005/102928 A1 sieht vor, den Katalysator in Form von Metalldrähten oder daraus hergestellten Metallnetzen einzusetzen. Als Metalle kommen W, Nb, Ta zum Einsatz. Die Formgebung dieser hochschmelzenden Metalle, zum Beispiel von W mit einem Schmelzpunkt von 3380 °C, ist technisch sehr aufwändig und kostenintensiv. Außerdem erfordert die Bereitstellung einer für katalytische Wirkungen ausreichend großen Oberfläche extreme Drahtlängen. Die Herstellung eines Drahtnetzes bzw. einer Wabe ist technisch noch aufwändiger und anspruchsvoller.

Des Weiteren stellt der Katalysator in dieser Form eine relativ kleine Oberfläche für die Umsetzung zur Verfügung, so dass nur ein geringer Teil des Materials für die Umsetzung relevant ist. Die Siliziumerzeugung auf diesem Wege ist also eher ineffizient.

EP 0 658 359 A2 beschreibt die katalytische Dehalogenierung bzw. Hydrodehalogenierung halogenhaltiger Verbindungen in Anwesenheit von Wasserstoff mittels eines katalytischen Systems. Dazu ist eine oder sind mehrere binäre metallische Verbindungen des Siliciums mit zumindest einem der Metalle Ni, Cu, Fe, Co, Mo, Pd, Pt, Re, Ce, oder La erforderlich. Die Schrift offenbart den Einsatz solcher Silicide in Form von Tabletten oder sogenannter *Pellets.* Silicide und Formträger müssen also in einem gesonderten Verfahrensschritt bereitgestellt werden, bevor die katalytische Hydrodehalogenierung durchgeführt werden kann.

Aufgabe der Erfindung war es daher, ein einfacheres Verfahren bereit zu stellen, SiCl₄ in HSiCl₃ zu hydrodehalogenieren.

Diese Aufgabe wird durch die Ansprüche 1 - 11 gelöst.

Es wurde gefunden, dass halogenhaltige Verbindungen der vierten Hauptgruppe in Anwesenheit von Wasserstoff und eines Katalysators katalytisch hydrodehalogeniert werden, indem zumindest ein Wirbelschichtreaktor eingesetzt wird, und der Katalysator zumindest ein Metall aufweist, wobei die Wirbelschicht den Katalysator enthält.

Das erfindungsgemäße Verfahren hat den Vorteil, dass in der Wirbelschicht katalytisch wirksame Waben, Netze, Drähte oder ähnliche Körper, sowie Pellets oder Tabletten, und die chemische Bindung des Katalysators in Form von Siliciden überflüssig sind. Überraschend einfach ist also der Katalysator selbst Bestandteil der Wirbelschicht des Wirbelschichtreaktors.

Gegenstand der Erfindung ist also ein Verfahren zur katalytischen Hydrodehalogenierung von halogenhaltigen Verbindungen der vierten Hauptgruppe in Anwesenheit von Wasserstoff und eines Katalysators, welches dadurch gekennzeichnet ist, dass zumindest ein Wirbelschichtreaktor eingesetzt wird, und der Katalysator zumindest ein Metall aufweist, wobei die Wirbelschicht den Katalysator enthält.

Das Verfahren wird im Folgenden näher erläutert.

In dem erfindungsgemäßen Verfahren kann der Katalysator in Form von metallischen Partikeln eingesetzt werden. Auch können Partikel eingesetzt werden, auf deren Oberflächen der Katalysator vorhanden ist. Diese Partikel können sphärisch, elliptisch, oder unregelmäßig geformt sein. Die Partikel können in Form von Primärpartikeln, Aggregaten und/oder Agglomeraten vorliegen. Ihre Oberflächen können glatt sein oder Feinstrukturen aufweisen.

Enthält die Wirbelschicht den Katalysator in der Art, dass auf und/oder in den Oberflächen der Partikel der Katalysator vorhanden ist, werden solche Partikel im Rahmen der Erfindung auch "*Kerne*" genannt.

Besonders bevorzugt wird der Katalysator in Form von metallischen Partikeln eingesetzt, oder es werden Partikel eingesetzt, auf deren Oberflächen der Katalysator vorhanden ist.

Besonders bevorzugt werden Partikel eingesetzt, die einen größten Durchmesser von 1 nm bis 10⁸ nm aufweisen. Die Partikel können jegliche Form aufweisen, ganz besonders bevorzugt jegliche Form und jegliche Größe. Beispielsweise können auch kugel-, ei-, scheibchen-, stift- oder nadelförmige Partikel eingesetzt werden.

Weiterhin bevorzugt können Partikel eingesetzt werden, die porös oder mikroporös sind, und/oder Partikel eingesetzt werden, die Formkörper sind. Die Partikel können gepresst, gesintert, mittels Sol-Gel-Verfahren, Laserablation oder Mahlen erhalten sein.

Falls Partikel eingesetzt werden, auf deren Oberflächen der Katalysator vorhanden ist, kann es vorteilhaft sein, wenn die Kerne dieser Partikel SiO₂ aufweisen, bevorzugt zusätzlich mit einer Auswahl aus Al, Fe, Ti, K, Na, Ca, Mg, oder einer Kombination dieser Materialien.

Bevorzugt wird das erfindungsgemäße Verfahren mit einem Katalysator durchgeführt, der ausgewählt ist aus zumindest ein Metall, eine Metalllegierung, Metalllegierung mit Metalllegierung, Metall mit Metalllegierung, Metall mit Metallsalz, Metallsalz mit Metalllegierung, Metallsalz mit Metallsalz, oder eine Kombination von diesen. Besonders bevorzugt wird das erfindungsgemäße Verfahren mit einem katalytisch wirkenden Metall durchgeführt.

Vorteilhaft wird der Katalysator ausgewählt aus einem Element der Gruppe Vb oder Vlb des Periodensystems der Elemente, bevorzugt Wolfram, Niob, und/oder Tantal. Ganz besonders bevorzugt kann als Katalysator Wolfram eingesetzt werden. Denn es hat sich überraschend herausgestellt, dass sich das erfindungsgemäße Verfahren mit Wolframpartikeln in jeglicher Form und Größe durchführen lässt. Besonders überraschend beobachtet man bei der Durchführung des erfindungsgemäßen Verfahrens, dass die Konversionsrate von Tetra- in Trichlorsilan in einem Wirbelschichtreaktor, dessen Wirbelschicht Wolframpartikel aufweist, höher ist, als ohne Katalysator, und bei während der Hydrodehalogenierung eingestellter höherer Temperatur.

Das erfindungsgemäße Verfahren kann vorteilhaft durchgeführt werden, um Chlorsilane zu hydrodehalogenieren, wobei die Hydrodehalogenierung in der Wirbelschicht stattfindet. Besonders bevorzugt wird SiCl₄ hydrodehalogeniert.

Das erfindungsgemäße Verfahren kann in Gegenwart oder in Abwesenheit von elementarem Silizium durchgeführt werden, vorzugsweise in Gegenwart von elementarem Silizium.

## Patentansprüche

1. Verfahren zur katalytischen Hydrodehalogenierung von halogenhaltigen Verbindungen der vierten Hauptgruppe in Anwesenheit von Wasserstoff und eines Katalysators,
**dadurch gekennzeichnet,**
**dass** zumindest ein Wirbelschichtreaktor eingesetzt wird, und der Katalysator zumindest ein Metall aufweist, wobei die Wirbelschicht den Katalysator enthält.

2. Verfahren nach Anspruch 1,
**dadurch gekennzeichnet,**
**dass** der Katalysator in Form von metallischen Partikeln eingesetzt wird, oder
Partikel eingesetzt werden, auf deren Oberflächen der Katalysator vorhanden ist.

3. Verfahren nach einem der vorhergehenden Ansprüche,
**dadurch gekennzeichnet,**
**dass** die Partikel einen größten Durchmesser von 1 nm bis 10⁸ nm aufweisen.

4. Verfahren nach einem der vorhergehenden Ansprüche,
**dadurch gekennzeichnet,**
**dass** die Partikel porös oder mikroporös, und/oder Formkörper sind.

5. Verfahren nach einem der vorhergehenden Ansprüche,
**dadurch gekennzeichnet,**
**dass**, falls Partikel eingesetzt werden, auf deren Oberflächen der Katalysator vorhanden ist, die Kerne dieser Partikel SiO₂ aufweisen,
bevorzugt zusätzlich mit einer Auswahl aus Al, Fe, Ti, K, Na, Ca, Mg, oder einer Kombination dieser Materialien.

6. Verfahren nach einem der vorhergehenden Ansprüche,
**dadurch gekennzeichnet,**
**dass** der Katalysator ausgewählt ist aus zumindest ein Metall, eine Metalllegierung, Metalllegierung mit Metalllegierung, Metall mit Metalllegierung, Metall mit Metallsalz, Metallsalz mit Metalllegierung, Metallsalz mit Metallsalz, oder eine Kombination von diesen ist.

7. Verfahren nach Anspruch 6,
**dadurch gekennzeichnet,**
**dass** der Katalysator ausgewählt ist aus einem Element der Gruppe Vb oder Vlb des Periodensystems der Elemente, bevorzugt Wolfram, Niob, und/oder Tantal.

8. Verfahren nach Anspruch 7,
**dadurch gekennzeichnet,**
**dass** der Katalysator Wolfram ist.

9. Verfahren nach einem der vorhergehenden Ansprüche,
**dadurch gekennzeichnet,**
**dass** Chlorsilane hydrodehalogeniert werden, wobei die Hydrodehalogenierung in der Wirbelschicht stattfindet.

10. Verfahren nach Anspruch 9,
**dadurch gekennzeichnet,**
**dass** SiCl₄ hydrodehalogeniert wird.

11. Verfahren nach einem der vorhergehenden Ansprüche,
**dadurch gekennzeichnet,**
**dass** die Hydrodehalogenierung in Gegenwart oder in Abwesenheit von elementarem Silizium durchgeführt wird.
